# EUROPEAN PATENT APPLICATION

(11) **EP 3 147 647 A1**
(43) Date of publication of application: **29.03.2017**
(21) Application number: 16189935.6
(22) Date of filing: 21.09.2016
(51) Int. Cl.: G01N 21/53, G01N 15/02

(54) **DETECTING DEVICE, DETECTING MODULE AND DETECTING METHOD FOR DETECTING PARTICLES IN A FLUID**

(30) Priority: 22.09.2015 US 201562221946 P
(71) Applicant: Aidmics Biotechnology Co., Ltd., Taipei City 10647 (TW)
(72) Inventor: LIN, Cheng-Ming, 10647 Taipei City (TW); CHEN, Chang-Yu, 10647 Taipei City (TW); CHIANG, Tsun-Chao, 10647 Taipei City (TW); LIN, Shu-Sheng, 10647 Taipei City (TW)
(74) Representative: Stöckeler, Ferdinand

(57) **Abstract**

A detecting device (1) for detecting a sample (S) in a fluid, e. g., dust in air or particles in drinking water, includes an image capturing unit (11), at least one lens (12), a detecting area (13) and a light source (14). The image capturing unit has at least one camera (111). The lens is disposed at one side of the image capturing unit corresponding to the camera. The lens and the image capturing unit together form a DOF area, and the lens has a first optical axis (141). The detecting area is located in the DOF area, and the fluid flows through the detecting area. The light source emits a light beam to the DOF area along a second optical axis (142) for illuminating at least a part of the detecting area. The image capturing unit captures at least a part of the light beam reflected, refracted or excited by the sample flowing through the detecting area for generating at least one sample image. The detecting device may further comprise a processing unit (17) configured to determine a diameter, a moving speed and a concentration of the sample based on the sample image.

## Description

### BACKGROUND OF THE INVENTION

### Field of Invention

The present invention relates to a detecting device, a detecting module and a detecting method for measuring the particles in a fluid.

### Related Art

In the recent years, the healthy issue has been discussed all the time. The discussed topics include the food safety as well as the requirements for air, water, drinking water and the likes.

Regarding to the air quality detection, there are many kinds of dust detectors for detecting the particles in the air. The conventional dust detectors usually detect the dust by light absorption, β ray, and static AC induction. In the dust detector of light absorption, it is necessary to use a pump to collect a certain amount of air containing dust and force the air to pass through a filter paper so as to remaining the dust (particles) on the filter paper. Next, a light beam is provided to pass through the filter paper and then irradiated on a Silicon photovoltaic cell for detecting the concentration of the dusts. However, the operations of the dust detector of light absorption are very complex, and the detecting results can't be monitored through network. Besides, the dust detector of β ray has radioactivity materials, so the operators thereof must be highly trained. The dust detector of static AC induction also has complex operation procedures and insufficient accurate.

Therefore, it is an important subject to provide a new detecting method for detecting the dust concentration that can be easily operated to detect the quality of the air, water and drinking water.

### SUMMARY OF THE INVENTION

In view of the foregoing subject, an objective of the present invention is to provide a detecting device, a detecting module and a detecting method that can be easily operated for detecting the particle concentration in a fluid. In this invention, the relative positions of a lens and an image capturing unit and a light beam path are properly designed so as to fabricate the detecting device and detecting module with smaller size.

To achieve the above objective, the present invention discloses a detecting device for detecting a sample in a fluid. The detecting device includes an image capturing unit, at least one lens, a detecting area, and a light source. The image capturing unit has at least a camera. The lens is disposed at one side of the image capturing unit corresponding to the camera. The lens and the image capturing unit together form a DOF (depth of field) area, and the lens has a first optical axis. The detecting area is located in the DOF area, and the fluid flows through the detecting area. The light source emits a light beam to the DOF area along a second optical axis for illuminating at least a part of the detecting area. The image capturing unit captures at least a part of the light beam reflected, refracted or excited by the sample flowing through the detecting area for generating at least one sample image.

To achieve the above objective, the present invention also discloses a detecting module, which is cooperated with an image capturing unit for detecting a sample in a fluid. The image capturing unit has at least one camera. The detecting module includes at least one lens, a detecting area and a light source. The lens is disposed corresponding to the camera. The lens and the image capturing unit together form a DOF area, and the lens has a first optical axis. The detecting area is located in the DOF area, and the fluid flows through the detecting area. The light source emits a light beam to the DOF area along a second optical axis for illuminating at least a part of the detecting area. The image capturing unit captures at least a part of the light beam reflected, refracted or excited by the sample flowing through the detecting area for generating at least one sample image.

To achieve the above objective, the present invention further discloses a detecting method applied to a detecting device for detecting a concentration of a sample in a fluid. The detecting device includes an image capturing unit, a lens, a detecting area, a light source, and a processing unit. The image capturing unit has a camera. The lens is disposed at one side of the image capturing unit corresponding to the camera, and the lens and the image capturing unit together form a DOF area. The lens has a first optical axis. The detecting area is located in the DOF area, and the fluid flows through the detecting area. The processing unit is connected to the image capturing unit. The detecting area has a vision depth, and the sample has a density. The detecting method includes the following steps of: the light source emitting a light beam to the DOF area along a second optical axis for illuminating at least a part of the detecting area; the image capturing unit capturing at least a part of the light beam reflected, refracted or excited by the sample flowing through the detecting area for generating at least one sample image, wherein the captured light beam is parallel to the first optical axis and traveling toward the lens; the processing unit receiving the at least one sample image, wherein the sample image comprises at least one path of the sample passing through the detecting area, and the path comprises a start point, a destination point and a path width; and the processing unit obtaining a particle diameter of the sample according to the start point, the destination point and the path width of the path, and calculating a concentration of the sample according to the particle diameter, the vision depth and the density.

In one embodiment, the lens has a convex portion, and the detecting area corresponds to the convex portion.

In one embodiment, the detecting device further includes a channel. The fluid flows in the channel and the detecting area is disposed in the channel.

In one embodiment, an axial direction of the channel is perpendicular to or parallel to the second optical axis.

In one embodiment, the detecting device further includes a processing unit connected to the image capturing unit and receiving the at least one sample image.

In one embodiment, the sample image includes a path of the sample passing through the detecting area, and the path comprises a start point, a destination point and a path width.

In one embodiment, the detecting area has a vision depth, and the sample has a density. The processing unit obtains a particle diameter of the sample according to the start point, the destination point and the path width of the path, and calculates a concentration of the sample according to the particle diameter, the vision depth and the density.

In one embodiment, the camera has a shutter, the camera controls the shutter to open for a shutter time, and the processing unit calculates a moving speed of the sample according to the start point, the destination point and the shutter time.

In one embodiment, the shutter time is between 1/5 seconds and 1/250 seconds.

In one embodiment, the detecting device further includes a transferring unit for transferring the at least one sample image to an external electronic device. The external electronic device calculates to obtain a particle diameter, a concentration or a moving speed of the sample.

As mentioned above, the relative positions of the lens and image capturing unit is properly designed, the detecting area is located in the DOF area, and the light beam path of the light source also irradiates to the DOF area. Thus, the detecting device and detecting module of the invention can have smaller sizes than the conventional dust detectors, so they can be easily carried.

In addition, the detecting device and detecting module of the invention can calculate to obtain the concentration, dimension and moving speed of the sample in the fluid. Thus, they can be widely applied to the detections of particles or dusts in air and the impurities in water. Moreover, the invention can also be applied to the bio samples for counting the numbers of cells, bacterium or fries, or for detecting the amount and activity of male sperms.

### BRIEF DESCRIPTION OF THE DRAWINGS

The invention will become more fully understood from the detailed description and accompanying drawings, which are given for illustration only, and thus are not limitative of the present invention, and wherein:
FIG. 1 is a schematic diagram showing a detecting device according to an embodiment of the invention;
FIG. 2 is a schematic diagram showing another aspect of the detecting area of FIG. 1;
FIG. 3 is a schematic diagram showing a sample image generated by the detecting device of FIG. 1;
FIG. 4 is a schematic diagram showing a detecting device according to another embodiment of the invention;
FIG. 5 is a schematic diagram showing a detecting module according to an embodiment of the invention; and
FIG. 6 is a flow chart of a detecting method applied to the detecting device according to an embodiment of the invention.

### DETAILED DESCRIPTION OF THE INVENTION

The present invention will be apparent from the following detailed description, which proceeds with reference to the accompanying drawings, wherein the same references relate to the same elements.

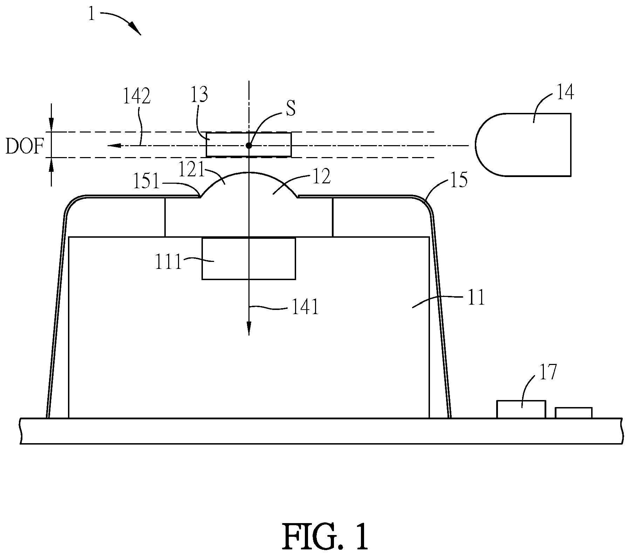

FIG. 1 is a schematic diagram showing a detecting device 1 according to an embodiment of the invention. Referring to FIG. 1, the detecting device 1 is configured for detecting a sample S in a fluid. In this embodiment, the fluid can be air or liquid. In more specific, when the fluid is air, the sample S can be the particles suspended in the air, such as dusts. In this case, the detecting device 1 can detect the concentration of the particles (dusts) in the air. When the fluid is liquid, the sample S can be particles in the drinking water or bio sample. In this case, the detecting device 1 can detect the concentration of the suspensions in drinking water, or count the numbers of cells, bacterium, fries, or sperms.

As shown in FIG. 1, the detecting device 1 includes an image capturing unit 11, at least one lens 12, a detecting area 13 and a light source 14. The image capturing unit 11 has at least one camera 111, and the lens 12 is disposed at one side of the image capturing unit 11 corresponding to the camera 111. In other words, the lens 12 is located at one side of the image capturing unit 11 closing to the camera 111, so that the light beam reflected by the sample S can pass the lens 12 and then be received by the camera 111 of the image capturing unit 11. The details will be further illustrated in the following embodiment. In addition, the image capturing unit 11 and the lens 12 are together packaged within a case 15. The lens 12 has a convex portion 121. In more detailed, the protruding aspheric structure of the lens 12 is the convex portion 121. In other embodiments, the lens 12 can be a lenticular lens, and this invention is not limited. One side of the case 15 has an opening 151, and the convex portion 121 of the lens 12 is disposed corresponding to the opening 151. Thus, the light beam reflected by the sample S can enter the lens 12.

In one embodiment, the image capturing unit 11, the lens 12, the detecting area 13 and the light source 14 can be together packaged. Of course, in other embodiments, the image capturing unit 11, the lens 12, the detecting area 13 and the light source 14 can also be separately configured. The lens 12 may be directly cooperated with the image capturing unit 11 of other electronic device. For example, the lens 12 can be directly placed in front of a camera or a camera module of a mobile phone, and this invention is not limited.

In this embodiment, the lens 12 and the image capturing unit 11 together form a DOF (depth of field) area DOF. After focusing the lens 12 with the image capturing unit 11, the object, which is placed within a range in front of and behind the focus plane, can have a clear image. In this case, the range in front of and behind the focus plane is defined as the DOF area DOF. In other words, after focusing the lens 12 with the image capturing unit 11, if the object (the sample S) is placed within the DOF area DOF, the image capturing unit 11 can capture a clear image; otherwise, if the object (the sample S) is not placed within the DOF area DOF, the image capturing unit 11 can't capture a clear image but a blurred image. In addition, the DOF area DOF of this embodiment is preferably smaller than 25 µm (e.g. between 1 µm and 25 µm, and preferably between 1 µm and 10 µm). Moreover, the lens 12 can be a general microscope lens having a focal length of less than 10 mm or 5 mm, and preferably between 0.5 mm and 3 mm. In other embodiments, the lens 12 can be a telescope lens having a focal length of more than 10 mm (e.g. several centimeters or meters).

In this embodiment, the detecting area 13 is configured in the DOF area DOF. Besides, the detecting area 13 can be a structure or a space that can communicate with the outside and allow the fluid to pass through. The range of the detecting area 13 corresponds to the range of the convex portion 121 of the lens 12 or to the range of the opening 151 of the case 15. As shown in FIG. 1, the detecting area 13 can be an open space, and the portion of the open space corresponding to the DOF area DOF and the convex portion 121 is defined as the detecting area 13. Moreover, the light source 14 also corresponds to the DOF area DOF, so that the light beam emitted from the light source 14 can reach the DOF area DOF and at least partially irradiates the detecting area 13 as well as a part of the fluid and the sample S in the fluid. After irradiating the sample S, the light beam S can be reflected, refracted or excited and then enter the lens 12. In this embodiment, the lens 12 has a first optical axis 141. Accordingly, the detecting area 13 is defined within the DOF area DOF and corresponding to the convex portion 121 of the lens 12. Thus, the sample S in the region far away from the opening 151 or the convex portion 121 can't reflect the light beam to the lens 12 through the opening 151.

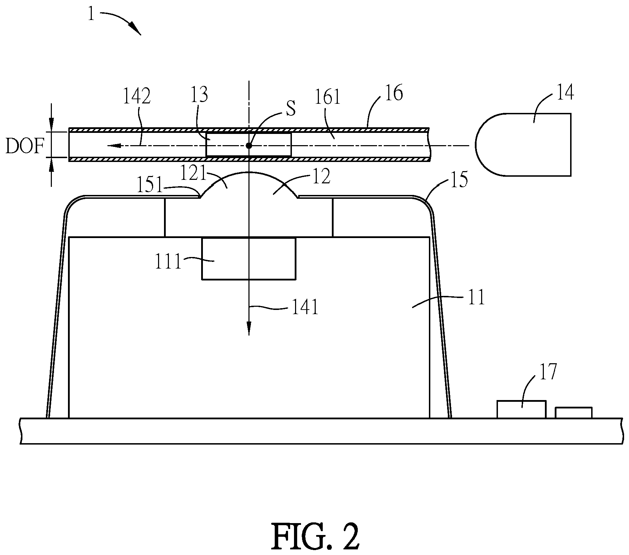

FIG. 2 is a schematic diagram showing another aspect of the detecting area of FIG. 1. Referring to FIG. 2, the detecting device 1 further includes a pillar 16, which is light permeable. The two ends of the pillar 16 are open structures, so that an unsealed channel 161 can be formed in the pillar 16. The pillar 16 can limit the fluid to flow within the channel 161, and the detecting area 13 is disposed in the channel 161. In this embodiment, the detecting area 13 is a channel structure, which allows the external fluid to flow through. Similarly, the detecting area 13 of FIG. 2 is defined as a region corresponding to the convex portion 121 of the lens 12 or corresponding to the opening 151 of the case 15.

Preferably, the light source 14 can emit a light beam with high directivity. For example, the light source 14 can be a laser light source for emitting a high directivity laser. Alternatively, the light beam emitted from the light source 14 may pass through a collimator in advance for generating a light beam with high directivity. The invention is not limited. The light beam with high directivity has a second optical axis 142. In practice, the axial direction of the channel 16 is perpendicular to or parallel to the second optical axis 142, and this invention is not limited. In this embodiment, the light beam emitted by the light source 14 has a width between 0.5 mm and 1 mm. Preferably, the first optical axis 141 and the second optical axis 142 are substantially perpendicular to each other. Accordingly, the light beam reflected, refracted or excited by the sample S, which is substantially perpendicular to the second optical axis 142, is defined as a light beam having a first optical axis 141.

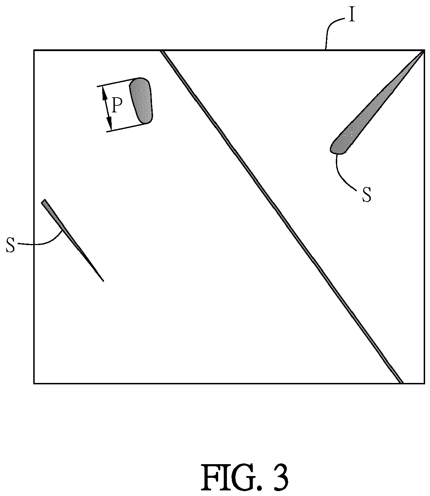

The image capturing unit 11 captures at least a part of the light beam reflected, refracted or excited by the sample S flowing through the detecting area 13 for generating at least one sample image I. In more detailed, the light source 14 emits a light beam to the DOF area DOF along the second optical axis 142 for irradiating at least a part of the detecting area 13. After the light beam emitted from the light source 14 (along the second optical axis 142) irradiates the sample S of the detecting area 13, the sample S can reflect, refract or excite at least a part of the light beam (the light beam having a first optical axis 141) to the lens 12, which is then captured by the camera 111 of the image capturing unit 11. Accordingly, the image capturing unit 11 can generate at least one sample image I. The shutter of the image capturing unit 11 can be between 1/5 seconds and 1/250 seconds. FIG. 3 is a schematic diagram showing a sample image I generated by the detecting device 1 of FIG. 1. The sample image I contains a plurality of paths formed a plurality of samples S. In this embodiment, the samples S are the particles (dusts) in the air. To be noted, the particles or dusts moves in three dimensions through the detecting area 13. However, the image capturing unit 11 only captures the projections of the particles or dusts (on the direction toward the DOF area DOF) to obtain 2D moving path images, thereby generating a 2D planar image (the sample image I).

In the detecting device 1 of the embodiment, the position and range of the detecting area 13 are fixed, so that it can estimate the capturing range of the sample image I and then calculate the concentration of the particles (samples S) in a unit area according to the samples S in the sample image I. In more specific, the detecting device 1 further includes a processing unit 17 connected to the image capturing unit 11 for receiving the sample image I to calculate the concentration or weight of the sample S. The sample image I shows the paths of a plurality of samples S in the detecting area 13, so it is possible to calculate the size of the sample S (e.g. the particle diameter) based on the path width of the samples S at the start point or destination point. Then, the concentration of the sample S can be calculated according to the field size, depth and the density of the samples S. In addition, the processing unit 17 can calculate the moving speed of the sample S based on the length of the path P of the sample S in the detecting area 13 and the shutter time. Of course, in other embodiments, the detecting device 1 may further include a transferring unit for transferring the one or more sample images I to an external electronic device (e.g. a smart phone). Then, the external electronic device can calculate to obtain a particle diameter, a concentration or a moving speed of the sample S. Accordingly, the detecting device 1 can digitalize the image of the suspended particles in the air, and the processing unit 17 can further execute a proper software to provide the related science data.

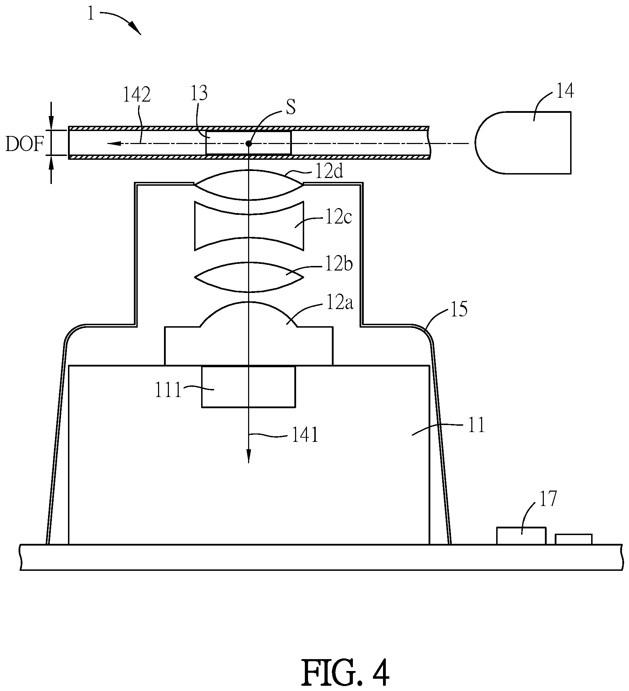

In the previous embodiment, the detecting device 1 includes only one lens 12. In other embodiments, the detecting device 1 may include a plurality of lenses 12a, 12b, 12c and 12d as shown in FIG. 4. FIG. 4 is a schematic diagram showing a detecting device according to another embodiment of the invention. The other components of the detecting device of FIG. 4 can be referred to the previous embodiment, so they all have the same reference numbers as the previous embodiment.

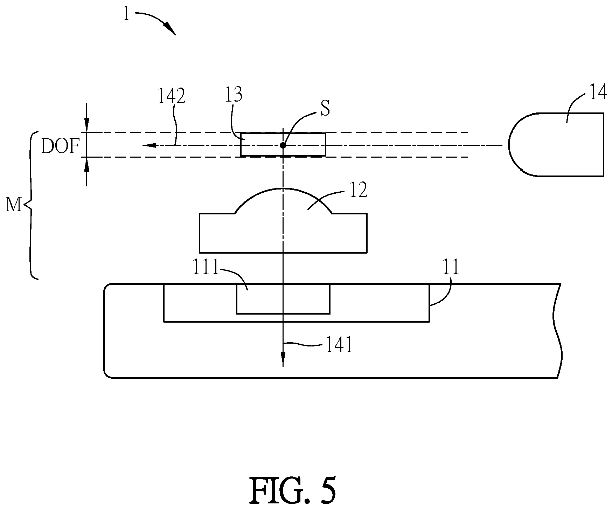

FIG. 5 is a schematic diagram showing a detecting module M according to an embodiment of the invention. As shown in FIG. 5, the detecting module M is cooperated with an image capturing unit 11 for detecting a sample S in a fluid. The image capturing unit 11 can be configured in a mobile phone or a digital camera. The detecting module M includes at least one lens 12, a detecting area 13 and a light source 14. The image capturing unit 11 has at least one camera 111. The lens 12 is disposed corresponding to the camera 111 of the image capturing unit 11. The lens 12 and the image capturing unit 11 together form a DOF area DOF, and the lens 12 has a first optical axis 141. The detecting area 13 is located in the DOF area DOF, and the fluid flows through the detecting area 13. The light source 14 emits a light beam to the DOF area DOF along a second optical axis 142 for illuminating at least a part of the detecting area 13. The image capturing unit 11 captures at least a part of the light beam reflected, refracted or excited by the sample S flowing through the detecting area 13 for generating at least one sample image I. The component connections of the detecting module M and the image capturing unit 11 can be referred to the previous embodiments, so the detailed descriptions thereof will be omitted.

In practice, the detecting device 1 can be directly connected to the smart phone, digital camera, or portable electronic device, or the detecting module M can be cooperated with the image capturing unit 11 of the smart phone or digital camera. Of course, the detecting device 1 can be operated individually. Accordingly, the user can obtain the image of particle path (e.g. the sample image I or the image of the path P of the sample) by the image capturing unit 11 of the smart phone or the digital camera. Then, the processing unit of the smart phone or the digital camera can calculate to obtain the concentration, moving speed, weight or size of the sample S, and display the data on the smart phone or the digital camera, so that the user can realize the condition of the current air quality. Then, the user can take a proper action such as leaving the current place, enabling/disabling the air cleaner, wearing the mask, and the likes. Besides, the user can upload the obtained data to the cloud, share or broadcast the message to the nearby smart phones, or enabling the related air cleaners through the transferring unit of the smart phone, digital camera or detecting device 1.

In on embodiment, the user can further obtain the level of air quality based on the sample image or data provided by the smart phone, digital camera or detecting device 1. In one embodiment, when the obtained level of air quality excesses a specific level, it will automatically announce the user to perform a health prevention action. In one embodiment, the smart phone, digital camera or detecting device 1 can also provide a long-term air conditions (e.g. for 24 hours). For example, the smart phone, digital camera or detecting device 1 can collect the accumulated breath amount and calculate to obtain the corresponding graphs, which can be provided to the user for personal health management and reminding the health breath situation and suggestions. Besides, the detecting device 1 or detecting module M can also be used for detecting male sperms, water, bio samples, medicines, foods, or the likes.

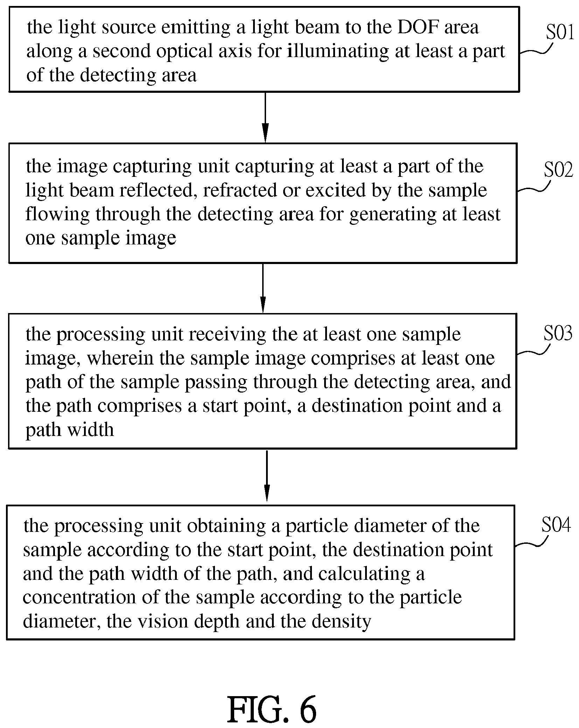

FIG. 6 is a flow chart of a detecting method applied to the detecting device 1 according to an embodiment of the invention. The detecting method will be discussed hereinafter with reference to FIGS. 1 and 6.

The detecting method is applied to the detecting device 1 for detecting a concentration of a sample S in a fluid. The detecting method includes the following steps S01 to S04.

At first, the light source emits a light beam to the DOF area along a second optical axis for illuminating at least a part of the detecting area (step S01). Next, the image capturing unit captures at least a part of the light beam reflected, refracted or excited by the sample flowing through the detecting area for generating at least one sample image (step S02). Then, the processing unit receives the at least one sample image, and the sample image comprises at least one path of the sample passing through the detecting area, wherein the path comprises a start point, a destination point and a path width (step S03). Finally, the processing unit obtains a particle diameter of the sample according to the start point, the destination point and the path width of the path, and calculates a concentration of the sample according to the particle diameter, the vision depth and the density (step S04).

The other technical features of the detecting device 1 for performing the detecting method can be referred to the above embodiments, so the detailed description thereof will be omitted.

In summary, the relative positions of the lens and image capturing unit is properly designed, the detecting area is located in the DOF area, and the light beam path of the light source also irradiates to the DOF area. Thus, the detecting device and detecting module of the invention can have smaller sizes than the conventional dust detectors, so they can be easily carried.

In addition, the detecting device and detecting module of the invention can calculate to obtain the concentration, dimension and moving speed of the sample in the fluid. Thus, they can be widely applied to the detections of particles or dusts in air and the impurities in water. Moreover, the invention can also be applied to the bio samples for counting the numbers of cells, bacterium or fries, or for detecting the amount and activity of male sperms.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A detecting device for detecting a sample in a fluid, comprising:
an image capturing unit having at least a camera;
at least one lens disposed at one side of the image capturing unit corresponding to the camera, wherein the lens and the image capturing unit together form a DOF (depth of field) area, and the lens has a first optical axis;
a detecting area located in the DOF area, wherein the fluid flows through the detecting area; and
a light source emitting a light beam to the DOF area along a second optical axis for illuminating at least a part of the detecting area;
wherein, the image capturing unit captures at least a part of the light beam reflected, refracted or excited by the sample flowing through the detecting area for generating at least one sample image.

2. The detecting device of claim 1, wherein the lens has a convex portion, and the detecting area corresponds to the convex portion.

3. The detecting device of claim 1, further comprising:
a channel, wherein the fluid flows in the channel and the detecting area is disposed in the channel.

4. The detecting device of claim 1, further comprising:
a processing unit connected to the image capturing unit and receiving the at least one sample image.

5. The detecting device of claim 4, wherein the sample image comprises a path of the sample passing through the detecting area, the path comprises a start point, a destination point and a path width, the detecting area has a vision depth, the sample has a density, and the processing unit obtains a particle diameter of the sample according to the start point, the destination point and the path width of the path, and calculates a concentration of the sample according to the particle diameter, the vision depth and the density.

6. The detecting device of claim 5, wherein the camera has a shutter, the camera controls the shutter to open for a shutter time, and the processing unit calculates a moving speed of the sample according to the start point, the destination point and the shutter time.

7. A detecting module, which is cooperated with an image capturing unit for detecting a sample in a fluid, wherein the image capturing unit has at least one camera, the detecting module comprising:
at least one lens disposed corresponding to the camera, wherein the lens and the image capturing unit together form a DOF area, and the lens has a first optical axis;
a detecting area located in the DOF area, wherein the fluid flows through the detecting area; and
a light source emitting a light beam to the DOF area along a second optical axis for illuminating at least a part of the detecting area;
wherein, the image capturing unit captures at least a part of the light beam reflected, refracted or excited by the sample flowing through the detecting area for generating at least one sample image.

8. The detecting module of claim 7, wherein the lens has a convex portion, and the detecting area corresponds to the convex portion.

9. The detecting module of claim 7, further comprising:
a channel, wherein the fluid flows in the channel and the detecting area is disposed in the channel.

10. The detecting module of claim 7, further comprising:
a processing unit connected to the image capturing unit and receiving the at least one sample image.

11. The detecting module of claim 10, wherein the sample image comprises at least one path of the sample passing through the detecting area, the path comprises a start point, a destination point and a path width, the detecting area has a vision depth, the sample has a density, and the processing unit obtains a particle diameter of the sample according to the start point, the destination point and the path width of the path, and calculates a concentration of the sample according to the particle diameter, the vision depth and the density.

12. The detecting module of claim 11, wherein the camera has a shutter, the camera controls the shutter to open for a shutter time, and the processing unit calculates a moving speed of the sample according to the start point, the destination point and the shutter time.

13. A detecting method applied to a detecting device for detecting a concentration of a sample in a fluid, wherein the detecting device comprises an image capturing unit, a lens, a detecting area, a light source, and a processing unit, the image capturing unit has a camera, the lens is disposed at one side of the image capturing unit corresponding to the camera, the lens and the image capturing unit together form a DOF area, the lens has a first optical axis, the detecting area is located in the DOF area, the fluid flows through the detecting area, the processing unit is connected to the image capturing unit, the detecting area has a vision depth, and the sample has a density, the detecting method comprising steps of:
the light source emitting a light beam to the DOF area along a second optical axis for illuminating at least a part of the detecting area;
the image capturing unit capturing at least a part of the light beam reflected, refracted or excited by the sample flowing through the detecting area for generating at least one sample image, wherein the captured light beam is parallel to the first optical axis and traveling toward the lens;
the processing unit receiving the at least one sample image, wherein the sample image comprises at least one path of the sample passing through the detecting area, and the path comprises a start point, a destination point and a path width; and
the processing unit obtaining a particle diameter of the sample according to the start point, the destination point and the path width of the path, and calculating a concentration of the sample according to the particle diameter, the vision depth and the density.
